Europäisches Patentamt

European Patent Office

Office européen des brevets

(11) Veröffentlichungsnummer: **0 443 186 A1**

# (12) EUROPÄISCHE PATENTANMELDUNG

(21) Anmeldenummer: 90125154.6

(51) Int. Cl.5: **G01N 27/18**

(22) Anmeldetag: 21.12.90

(30) Priorität: 17.02.90 DE 4005131

(43) Veröffentlichungstag der Anmeldung:
28.08.91 Patentblatt 91/35

(84) Benannte Vertragsstaaten:
DE FR GB IT NL

(71) Anmelder: ROSEMOUNT GMBH & CO.,
GESCHÄFTSBEREICH ANALYSENTECHNIK
Wilhelm-Rohn-Strasse 51
W-6450 Hanau 1(DE)

(72) Erfinder: Krause, Hans, Dr.
Eichendorffstrasse 4
W-6350 Bad Nauheim(DE)
Erfinder: Wylenzek, Norbert
Hirzbach 34
W-6451 Hammersbach(DE)

(74) Vertreter: Haar, Lucas H., Dipl.-Ing.
Patentanwalt
Königsberger Strasse 23
W-6360 Friedberg/Hessen 1(DE)

(54) **Messzelle für einen Wärmeleitfähigkeits-Analysator.**

(57) Die Meßzelle für einen Analysator zum Nachweis von gasförmigen oder flüssigen Medien durch Messen der Wärmeleitfähigkeit besteht aus einem durch eine regelbare Wärmequelle thermostatisierbaren, symmetrischen Gehäuse (1), durch das zwei voneinander getrennte mit einem Meß- bzw. Vergleichsmedium durchströmbare Kanäle (11, 12) hindurchführen, die jeweils mit einer einen Thermofühler enthaltenden Meßkammer (4, 5) in Verbindung stehen. Um eine stabile Nullpunktlage zu erreichen, sind die Meßkammern (4, 5) und die Kanäle (11, 12) zur Wärmequelle und zueinander symmetrisch angeordnet und die Strömungsrichtung in beiden Kanälen (11, 12) ist entgegengesetzt.

FIG. 4

EP 0 443 186 A1

Die Erfindung betrifft eine Meßzelle für einen Analysator zum Nachweis von gasförmigen oder flüssigen Medien durch Messen der Wärmeleitfähigkeit, bestehend aus einem durch eine regelbare Wärmequelle thermostatisierbaren, symmetrischen Gehäuse, durch das zwei voneinander getrennte mit einem Meß- bzw. Vergleichsmedium durchströmbare Kanäle hindurchführen, die jeweils mit einer einen Thermofühler enthaltenden Meßkammer in Verbindung stehen.

Analysatoren, die nach dem Prinzip der Wärmeleitfähigkeit arbeiten, werden in vielen Bereichen der Prozeß- und Umweltanalyse von Gasen eingesetzt. Ein Anwendungsschwerpunkt ist die kontinuierliche Erfassung von Wasserstoff, da dieser im Vergleich zu fast allen anderen Gasen eine sehr hohe Wärmeleitfähigkeit aufweist. Zur Erfassung der Wärmeleitfähigkeit wird von den Analysatoren die Abkühlung der in der Meßzelle enthaltenen, elektrisch beheizten Thermofühler durch das sie umgebende Meßmedium als Änderung des elektrischen Widerstandes gemessen.

Bekannt ist ein Wärmeleitfähigkeits-Analysator, bei dem die Meßzelle aus einem äußeren Ring mit Anschlüssen für die Zu- und Abfuhr des Meß- und Vergleichsmediums und einem darin drehbar angeordneten, zylindrischen Einsatz besteht, in dem Thermofühler angeordnet sind. Der Einsatz ist mit zwei radialen, im Abstand voneinander angeordneten Durchgangsbohrungen versehen, an die über Axialbohrungen jeweils zwei Thermofühler angeschlossen sind. Eine Durchgangsbohrung wird vom Meßmedium beströmt, die zweite vom Vergleichsmedium. Die Durchgangsbohrungen münden in Ringnuten in der Mantelfläche des Einsatzes, die jeweils mit zwei diametral angeordneten Anschlüssen im äußeren Ring in Verbindung stehen. Je nach der durch Drehen des Einsatzes gewählten Stellung der Durchgangsbohrungen zu den Anschlüssen des äußeren Rings erfolgt eine Aufteilung der Ströme des Meß- bzw. Vergleichsmediums auf die Durchgangsbohrungen bzw. die Ringnuten am Umfang des Einsatzes. Hierdurch läßt sich die Strömungsgeschwindigkeit an den Thermofühlern variieren, um ein günstiges Verhältnis zwischen der Ansprechzeit und der Unabhängigkeit des Meßwerts von Strömungseinflüssen zu erzielen. Die bekannte Meßzelle hat den Nachteil, daß sie eine verhältnismäßig große Masse benötigt, so daß bis zum Erreichen der Meßbereitschaft eine lange Aufheizzeit erforderlich ist. Unterschiede in der Kanalführung zwischen Meß- und Vergleichsseite bewirken ferner eine Asymmetrie bei der Abkühlung der Thermofühler. Dies hat eine störende Nullpunktverschiebung als Funktion des Durchflusses zur Folge. Weiterhin ergibt sich bei der Thermostatisierung der Meßzelle eine ungleichmäßige Temperaturverteilung, die zu einer die Meßgenauigkeit beeinträchtigenden Nullpunktverschiebung führt.

Der Erfindung liegt die Aufgabe zugrunde, eine Meßzelle der eingangs genannten Art zu schaffen, die sich durch eine gleichmäßige Temperaturverteilung auszeichnet und eine stabile Nullpunktlage gewährleistet.

Die Aufgabe wird erfindungsgemäß dadurch gelöst, daß die Meßkammern, die Kanäle und die Wärmequelle derart symmetrisch zueinander angeordnet sind, daß sie durch eine Drehung des Gehäuses um die Symmetrieachse um 180° deckungsgleich gegeneinander vertauschbar sind und daß die Strömungsrichtung in beiden Kanälen entgegengesetzt ist.

Mit der Erfindung wird eine Meßzelle geschaffen, bei der sich im Bereich der Kanäle und der Thermofühler ein in hohem Maße symmetrischer Thermperaturverlauf ergibt. Unterschiede in der Temperaturverteilung zwischen der Meß- und der Vergleichsseite werden auf ein Minimum reduziert. Durch die vollständige Symmetrie sowohl der Strömungsverhältnisse als auch der Temperaturverteilung in der Meßzelle lassen sich eine hohe Meßgenauigkeit und eine stabile, strömungsunabhängige Nullpunktlage erreichen. Weiterhin ermöglicht die Erfindung bei ausreichend langen Strömungswegen eine räumlich kompakte Ausgestaltung der Meßzelle mit geringer Masse und einer entsprechend kurzen Aufheizzeit.

Erfindungsgemäß kann weiterhin vorgesehen sein, daß die Kanäle in einem in Strömungsrichtung vor der Meßkammer liegenden Teilbereich einen geringen Abstand voneinander haben. Durch den geringen Abstand wird die Wärmeübertragung von einem Kanal zum anderen erleichtert, so daß eventuell vorhandene Temperaturunterschiede zwischen dem Meßmedium und dem Vergleichsmedium nach dem Gegenstromprinzip herabgesetzt werden. Besonders wirksam läßt sich die Temperatur der den Meßzellen zuströmenden Medien einander angleichen, wenn nach einem weiteren Vorschlag der Erfindung die Kanäle in dem in Strömungsrichtung vor der Meßkammer liegenden Teilbereich parallel zueinander verlaufen, da dann auf einer verhältnismäßig langen Gegenstromstrecke ein guter Wärmeübergang gegeben ist. Weiterhin kann erfindungsgemäß vorgesehen sein, daß der in Strömungsrichtung vor der Meßkammer liegende Teilbereich der Kanäle sich über den größeren Teil der Gehäuselänge erstreckt. Auf diese Weise wird eine wirksame Erwärmung oder Abkühlung der Meß- und Vergleichsmedien bei kompakten Gehäuseabmessungen und entsprechend geringer Gehäusemasse erreicht.

In einer bevorzugten Ausgestaltung der Erfindung ist vorgesehen, daß das Gehäuse die Form eines Quaders hat, durch den die Kanäle in Längsrichtung von einer Stirnseite zur anderen geführt sind, wobei von jedem Kanal eine Anschlußbohrung abzweigt, die zu einer durch eine Stufenbohrung in einer Längsseite des Quaders gebildeten Meßkammer führt. Um den Austausch der Medien in der Meßkammer zu beschleunigen und damit die Ansprechzeit zu reduzieren, ist nach einem weiteren Vorschlag der Erfindung vorgesehen, daß ein in Strömungsrichtung vor der Anschlußbohrung liegender Kanalabschnitt in einem Winkel von >90° mit der Anschlußbohrung verbunden ist. Auf diese Weise wird je nach Größe des Winkels ein mehr oder weniger großer Teil des den Kanal durchströmenden Mediums in die Anschlußbohrung und damit zur Meßkammer geleitet, so daß bereits nach kurzer Anströmzeit stabile Meßbedingungen erreicht sind. Um eine besonders geringe Ansprechzeit zu erreichen, kann vorgesehen sein, daß der vor der Anschlußbohrung liegende Kanalabschnitt im wesentlichen koaxial zur Anschlußbohrung ausgerichtet ist. Erfindungsgemäß kann weiterhin vorgesehen sein, daß jeweils zwischen dem Kanal und der Meßkammer ein Strömungsberuhigungsraum vorgesehen ist, wobei im Strömungsberuhigungsraum zusätzlich Mittel zur Strömungsunterdrükkung angeordnet sein können. Auf diese Weise läßt sich auch bei vergleichsweise direkter Anströmung der Anschlußbohrung und entsprechend kurzer Ansprechzeit eine Strömungsabhängigkeit des Meßsignals vermeiden. Die Medien können mit vergleichsweise hoher Strömungsgeschwindigkeit und damit in kurzer Zeit bis nahe an die Meßkammer herangeführt werden und benötigen dann nur noch einen kurzen Weg um durch den Strömungsberuhigungsraum in die Meßkammer zu gelangen. Es ergibt sich dadurch ein für den praktischen Einsatz optimales Verhältnis zwischen niedriger Ansprechzeit und minimaler Strömungsabhängigkeit erzielen.

Eine meßtechnisch wie auch fertigungstechnisch besonders vorteilhafte Ausgestaltung der Meßzelle wird erfindungsgemäß dadurch erreicht, daß beide Endabschnitte der Kanäle durch parallel versetzte Sackbohrungen gebildet sind und daß die Sackbohrungen jeweils durch eine von der Anschlußbohrung ausgehende, den Mittelabschnitt des Kanal bildende Querbohrung miteinander verbunden sind.

Sollen die Kanäle durch einen einzigen Bohrvorgang herstellbar sein, so kann in einer weiteren Ausgestaltung der Erfindung vorgesehen sein, daß die Kanäle das Gehäuse gradlinig durchdringen und in zueinander und zur Symmetrieachse parallelen Ebenen windschief zueinander verlaufen. Durch die windschiefe Anordnung der Kanäle wird dabei der an den Kanalmündungen erforderliche Abstand für die Anordnung von Anschlußelementen, wie beispielsweise Schraubanschlüssen erzeugt.

Um eine möglichst kurze Aufheizzeit der Meßzelle zu erreichen, ist nach einem weiteren Vorschlag der Erfindung vorgesehen, daß die Wärmequelle zwei getrennte Heizelemente aufweist, die auf entgegengesetzten Längsseiten des Gehäuses symmetrisch angeordnet sind. Weiterhin kann ein Temperaturfühler zur Überwachung der Thermostatisierung vorteilhaft koaxial zur Symmetrieachse, also im Zentrum der Meßzelle angeordnet sein. Der Temperaturfühler befindet sich dann etwa in gleicher Entfernung von den Heizelementen der Wärmequelle wie von den Meßzellen, so daß die von dem Temperaturfühler gemessenen Temperaturen sehr genau den Wandtemperaturen der Meßzellen entsprechen.

Die Erfindung wird nachfolgend an Hand von Ausführungsbeispielen näher erläutert, die in der Zeichnung dargestellt sind. Es zeigen

Figur 1     eine Draufsicht auf eine für einen Gasanalysator bestimmte Ausführungsform der erfindungsgemäßen Meßzelle,

Figur 2     einen Schnitt durch die Meßzelle gemäß Figur 1 entlang der Linie AB,

Figur 3     einen Schnitt durch die Meßzelle gemäß Figur 1 entlang der Linie CD,

Figur 4     einen Schnitt durch die Meßzelle gemäß Figur 1 entlang der Linie EF in Figur 2,

Figur 5     einen Schnitt durch die Meßzelle gemäß Figur 1 entlang der Linie GH in Figur 4,

Figur 6     eine Draufsicht einer anderen Ausführungsform der erfindungsgemäßen Meßzelle,

Figur 7     einen Schnitt durch die Meßzelle gemäß Figur 6 entlang der Linie AB und

Figur 8     eine Ansicht C der Meßzelle gemäß Figur 6.

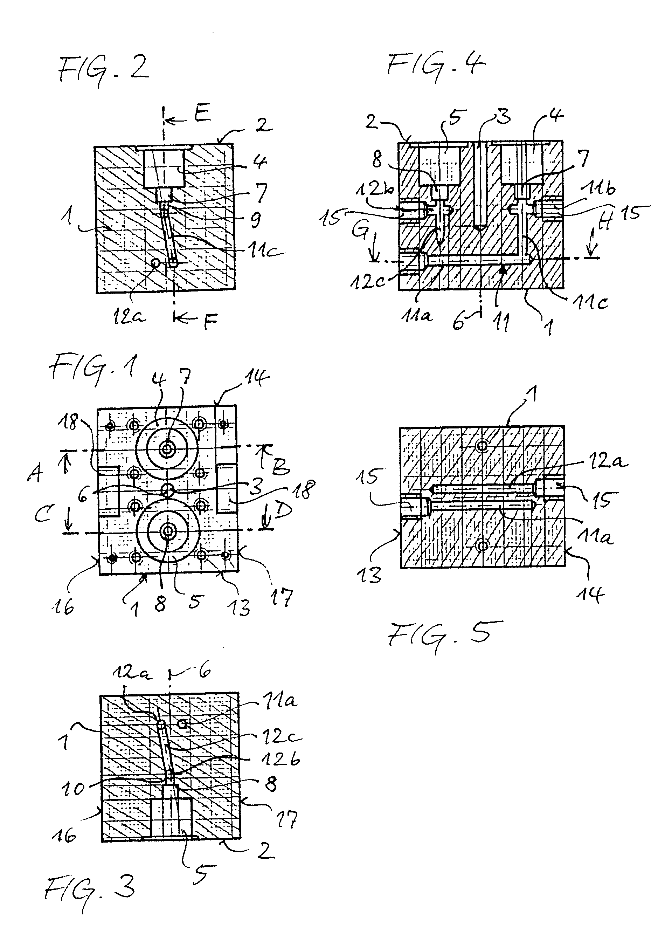

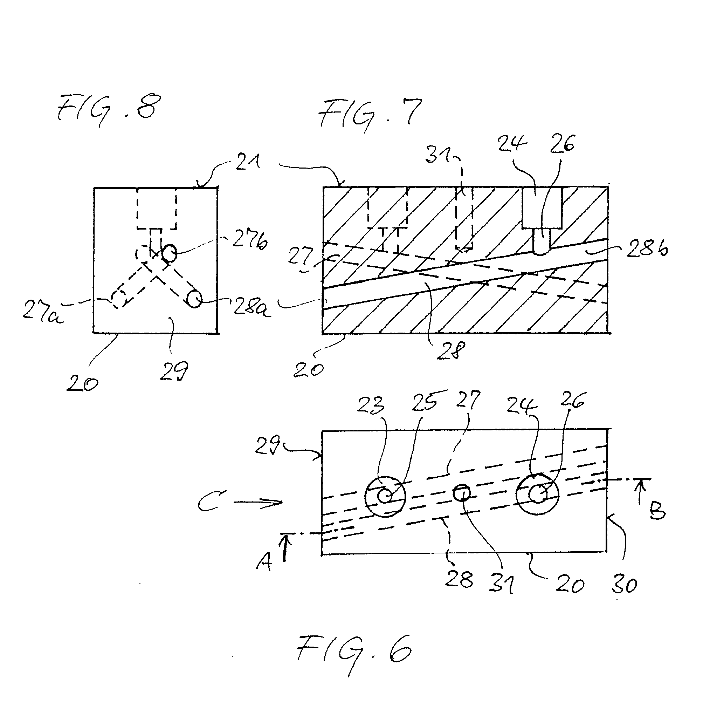

Die in den Figuren 1 bis 5 gezeigte Meßzelle besteht aus einem quaderförmigen Gehäuse 1, welches aus einem metallischen Werkstoff hergestellt ist. In der Oberseite 2 des Gehäuses 1 sind eine Zentralbohrung 3 und zwei Stufenbohrungen 4, 5 angeordnet. Die Zentralbohrung 3 ist koaxial zu einer Symmetrieachse 6 angeordnet, die durch die zur Oberseite 2 ortogonale Mittelachse gebildet wird. Die Zentralbohrung 3 dient zur Aufnahme eines Temperaturfühlers, mit dem eine Thermostatisierung des Gehäuses 1 überwacht werden kann. Die Stufenbohrungen 3, 4 haben gleiche Abmessungen und sind zentralsymmetrisch zur Symmetrieachse 6 angeordnet. Die in ihrem Durchmesser größeren Abschnitte der Stufenbohrungen 4, 5 nehmen Thermofühler zum Messen der Wärmeleitfähigkeit auf. Durch die Thermofühler werden die Stufenbohrungen 4, 5 nach außen verschlossen, und es werden zwei Meßkammern gebildet, die mit den im Durchmesser kleineren Abschnitten der Stufenbohrungen 4, 5 in Verbindung stehen. Die Thermofühler werden elektrisch aufgeheizt. Ihre Temperatur und ihr elektrischer Widerstand hängen nur vom Wärmetransport ab, der durch das Gas von den Thermofühlern zur kälteren Wand der Meßzelle bewirkt wird und der bei sonst konstanten Bedingungen proportional zur Wärmeleitfähigkeit des Gases ist. Durch die Messung des elektrischen Widerstands der Thermofühler kann daher die Wärmeleitfähigkeit des Gases und damit auch die Gaszusammensetzung bestimmt werden.

Die im Durchmesser kleineren Abschnitte der Stufenbohrungen 4, 5 dienen als Strömungsberuhigungsräume 7, 8. In ihnen können Mittel zur Strömungsunterdrückung wie Labyrinthvorrichtungen, Siebe, Gitter oder ähnliche geeignete Vorrichtungen angeordnet sein. Von den Strömungsberuhigungsräumen 7, 8 führen kurze Anschlußbohrungen 9, 10 jeweils zu einem gesonderten Kanal 11, 12, durch den das Meß- bzw. Vergleichsgas hindurchgeleitet wird. Jeder Kanal 11, 12 besteht aus einer Eingangsbohrung 11a, 12a, einer Ausgangsbohrung 11b, 12b und einer Querbohrung 11c, 12c, die die Eingangsbohrung 11a, 12a mit der Ausgangsbohrung 11b, 12b verbindet. Die Eingangsbohrungen 11a, 12a sind parallel und symmetrisch zueinander angeordnet. Sie führen senkrecht von zentralsymmetrischen Punkten auf den einander entgegengesetzten Stirnseiten 13, 14 in das Gehäuse 1 hinein und verlaufen dicht nebeneinander unterhalb der Zentralbohrung 3 und der Stufenbohrungen 4, 5 jeweils bis unter die von ihrer Einlaßöffnung entferntere Stufenbohrung 4 bzw. 5. Die Auslaßbohrungen 11b, 12b sind über den Einlaßbohrungen 11a, 12a und parallel zu diesen angeordnet. Ihre gemeinsame Längsachse schneidet ortogonal die Symmetrieachse 6 und die Längsachsen der Stufenbohrungen 4, 5 und der Anschlußbohrungen 9, 10. Die Anschlußbohrungen 9, 10 münden in die Auslaßbohrungen 11b, 12b, die jeweils in einem Abstand von der Zentralbohrung 3 enden. Die Längsachsen der Querbohrungen 11c, 12c liegen in zu den Auslaßbohrungen 11b, 12b ortogonalen Ebenen und schneiden die Längsachsen der Stufenbohrungen 4, 5 in jeweils entgegengesetzter Richtung in einem spitzen Winkel. Durch die Winkellage der Querbohrungen 11c, 12c wird der Mittenversatz der Einlaßbohrungen 11a, 12a ausgeglichen. Die Herstellung der Querbohrungen 11c, 12c erfolgt durch die Stufenbohrungen 4, 5 und die Anschlußbohrungen 9, 10. hindurch. Zum Befestigen von Anschlußarmaturen sind die Einlaß und Auslaßöffnungen der Kanäle 11, 12 jeweils mit einem Einschraubgewinde 15 versehen. In der Mitte seiner beiden Längsseiten 16, 17 weist das Gehäuse 1 Aussparungen 18 in Form von Nuten auf, in die Heizelemente gleicher Leistung einsetzbar sind, mit denen das Gehäuse 1 thermostatisiert werden kann.

Das beschriebene Gehäuse 1 ist in allen Einzelheiten in bezug auf die Symmetrieachse 6 zentralsymmetrisch ausgebildet. Wird beispielsweise das Gehäuse 1 um die Symmetrieachse 6 um 180° gedreht, so werden die Stufenbohrungen 3, 4 oder die Kanäle 11, 12 deckungsgleich gegeneinander vertauscht, d. h. die Stufenbohrung 3 tritt an die Stelle der Stufenbohrung 4 und der Kanal 11 tritt an die Stelle des Kanals 12 und umgekehrt. Dieser symmetrische Aufbau des Gehäuses 1 führt bei der Thermostatisierung zu einer vollkommen symmetrischen Temperaturverteilung und damit zu gleichen Temperaturen an allen einander entsprechenden Stellen von Meß- und Vergleichsseite. Damit wird eine weitestgehend temperaturunabhängige Nullpunktlage des Meßsignals erreicht. Durch die Einlaßbohrungen 11a, 12a sowie durch die Querbohrungen 11c, 12c wird der Gasstrom auf einer vergleichsweise langen Strecke erwärmt oder abgekühlt, wodurch sich im Bereich der Meßzellen auch bei größeren Strömungsgeschwindigkeiten eine hohe Temperaturkonstanz erreichen läßt. Dabei bilden die im Gegenstrom durchströmten Einlaßbohrungen 11a, 12a durch ihren geringen Abstand zusätzlich eine Art Wärmetauscher, durch den Temperaturunterschiede zwischen dem Meßgasstrom und dem Vergleichsgasstrom besonders wirksam ausgeglichen werden können. Durch die Lage der Querbohrungen 11c, 12c wird weiterhin eine günstige Anströmung der Meßzellen erreicht, so daß sich in Verbindung mit einer Vorrichtung zur Srömungsunterdrückung eine sehr kleine $T_{90}$-Zeit von etwa einer Sekunde erreichen läßt. Die Anordnung von zwei einander gegenüberliegenden Heizelementen führt in Verbindung mit der erreichbaren geringen Masse des Gehäuses zu einer erheblichen Verkürzung der Aufheizzeit.

Bei dem in den Figuren 5 bis 7 dargestellten Ausführungsbeispiel besteht die Meßzelle aus einem ebenfalls quaderförmigen Gehäuse 20, welches in seiner Oberseite 21 wie bei dem zuvor beschriebenen Ausführungsbeispiel symmetrisch zu der durch eine Mittelachse gebildeten Symmetrieachse 22 Stufenbohrungen 23, 24 aufweist, die über koaxiale Anschlußbohrungen 25, 26 an Kanäle 27, 28 angeschlossen sind. Die Kanäle 27, 28 durchdringen das Gehäuse 20 von einer Stirnseite 29 zur anderen Stirnseite 30 vollkommen gradlinig. Ihre Längsachsen liegen in zwei zueinander parallelen Ebenen, deren Abstand wenigstens so groß bemessen ist, daß die Kanäle einen ausreichenden Abstand voneinander haben. Die Ebenen sind zur Symmetrieachse 22 parallel und gehen jeweils durch das Zentrum von einer der beiden Stufenbohrungen 23, 24. Zur Oberseite 21 des Gehäuses 20 sind die Kanäle 27, 28 derart geneigt, daß ihre Einlaßöffnungen 27a, 28a einen größeren Abstand von der Oberseite 21 haben als ihre Auslaßöffnungen 27b, 28b. Durch diese Neigung wird ein ausreichender Abstand zwischen der Einlaßöffnung 27a bzw. 28a und der Auslaßöffnung 28b bzw. 27b in der selben Stirnseite 30 bzw. 29 erzielt. Weiterhin bewirkt die Neigung der Kanäle 27, 28 an der Mündung der Anschlußbohrungen 25, 26 eine teilweise Ablenkung der Gasströme in Richtung der Meßkammern, wodurch der Gasaustausch in den Meßkammern begünstigt und die Ansprechzeit verkürzt wird. Da die Meßkammern bei diesem Ausführungsbeispiel jedoch nicht direkt angeströmt werden, ist es nicht unbedingt erforderlich, vor den Meßkammern besondere Einrichtungen zur Strömungsberuhigung vorzusehen.

Das Gehäuse 20 eignet sich bersonders für eine verhältnismäßig flache, langgestreckte Formgestalt der Meßzelle. Die Wärmequelle kann dabei entweder als zentrale Einheit auf der Unterseite des Gehäuses 20 oder in zwei Heizelemente unterteilt an beiden Längsseiten des Gehäuses 20 angeordnet sein. Für den Einbau eines Temperaturfühlers weist das Gehäuse 20 auf seiner Oberseite eine zur Symmetrieachse 22 koaxiale Bohrung 31 auf.

## Patentansprüche

1. Meßzelle für einen Analysator zum Nachweis von gasförmigen oder flüssigen Medien durch Messen der Wärmeleitfähigkeit, bestehend aus einem durch eine regelbare Wärmequelle thermostatisierbaren, symmetrischen Gehäuse, durch das zwei voneinander getrennte mit einem Meß- bzw. Vergleichsmedium durchströmbare Kanäle hindurchführen, die jeweils mit einer einen Thermofühler enthaltenden Meßkammer in Verbindung stehen,
**dadurch gekennzeichnet,**
daß die Meßkammern (4, 5; 23, 24) und die Kanäle (11, 12; 27, 28) zur Wärmequelle und zueinander derart symmetrisch angeordnet sind, daß sie durch eine Drehung des Gehäuses (1, 20) um die Symmetrieachse (6, 22) um 180° deckungsgleich gegeneinander vertauschbar sind und daß die Strömungsrichtung in beiden Kanälen (11, 12; 27, 28) entgegengesetzt ist.

2. Meßzelle nach Anspruch 1, dadurch gekennzeichnet, daß die Kanäle (11, 12) in einem in Strömungsrichtung vor der Meßkammer (4, 5) liegenden Teilbereich (11a, 12a) einen geringen Abstand voneinander haben.

3. Meßzelle nach Anspruch 2, dadurch gekennzeichnet, daß die Kanäle (11, 12) in dem Teilbereich (11a, 12a) parallel zueinander verlaufen.

4. Meßzelle nach einem der vorhergehenden Ansprüche, dadurch gekennzeichnet, daß der in Strömungsrichtung vor der Meßkammer (5, 6) liegende Teilbereich (11a, 12a) der Kanäle (11, 12) sich über den größeren Teil der Gehäuselänge erstreckt.

5. Meßzelle nach einem der vorhergehenden Ansprüche, dadurch gekennzeichnet, daß das Gehäuse (1, 20) die Form eines Quaders hat, durch den die Kanäle (11, 12; 27, 28) in Längsrichtung von einer Stirnseite (13, 29) zur entgegengesetzten Stirnseite (14, 30) geführt sind, wobei von jedem Kanal (11, 12; 27, 28) eine Anschlußbohrung (9, 10; 25, 26) abzweigt, die zu einer durch eine Stufenbohrung (4, 5; 23, 24) in einer Längsseite des Quaders gebildeten Meßkammer führt.

6. Meßzelle nach einem der vorhergehenden Ansprüche, dadurch gekennzeichnet, daß eine in Strömungsrichtung vor der Anschlußbohrung (9, 10; 25, 26) liegender Kanalabschnitt (11c, 12c) in einem Winkel von mehr als 90° mit der Anschlußbohrung verbunden ist.

7. Meßzelle nach Anspruch 6, dadurch gekennzeichnet, daß der vor der Anschlußbohrung liegende Kanalabschnitt (11c, 12c) im wesentlichen koaxial zur Anschlußbohrung (9, 10) ausgerichtet ist.

8. Meßzelle nach einem der vorhergehenden Ansprüche, dadurch gekennzeichnet, daß zwischen dem Kanal (11, 12) und der Meßkammer (4, 5) ein Strömungsberuhigungsraum (7, 8) vorgesehen ist.

9. Meßzelle nach Anspruch 8, dadurch gekennzeichnet, daß im Strömungsberuhigungsraum (7, 8) Mittel zur Strömungsunterdrückung angeordnet sind.

10. Meßzelle nach einem der vorhergehenden Ansprüche, dadurch gekennzeichnet, daß beide Endabschnitte (11a, 11b, 12a, 12b) der Kanäle (11, 12) durch parallel versetzte Sackbohrungen gebildet sind und daß die Sackbohrungen durch von den Anschlußbohrungen (9, 10) ausgehende, den Mittelabschnitt der Kanäle bildende Querbohrungen (11c, 12c) miteinander verbunden sind.

11. Meßzelle nach einem der Ansprüche 1 bis 9, dadurch gekennzeichnet, daß die Kanäle (27, 28) das Gehäuse (20) gradlinig durchdringen und windschief zueinander angeordnet sind, wobei ihre Längsachsen in zueinander und zur Symmetrieachse (22) parallelen Ebenen liegen.

12. Meßzelle nach einem der vorhergehenden Ansprüche, dadurch gekennzeichnet, daß die Wärmequelle zwei getrennte Heizelemente aufweist, die auf entgegengesetzten Längsseiten des Gehäuses (1) symmetrisch angeordnet sind.

13. Meßzelle nach einem der vorhergehenden Ansprüche, dadurch gekennzeichnet, daß koaxial zur Symmetrieachse (6, 22) eine Zentralbohrung (3, 31) zur Aufnahme eines Temperaturfühlers angeordnet ist.

FIG. 2

FIG. 4

FIG. 1

FIG. 5

FIG. 3

FIG.8

FIG.7

FIG.6

Europäisches
Patentamt

**EUROPÄISCHER
RECHERCHENBERICHT**

Nummer der Anmeldung

**EP 90 12 5154**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 281 966 (PERKIN-ELMER)<br>* Zusammenfassung; Spalte 3, Zeilen 28-32; Spalte 4, Zeilen 5-6,19-21; Spalte 5, Zeilen 15-21; Figuren 1-6 * | 1-4 | G 01 N 27/18 |
| Y | US-A-3 922 904 (WILLIAMS)<br>* Zusammenfassung; Spalte 3, Zeilen 8-16; Figur 1 * | 1-4 | |
| A | US-A-2 512 857 (WILLIAM)<br>* Spalte 1, Zeilen 1-3; Spalte 2, Zeilen 9-15; Figuren 1,2 * | 1,5,7 | |
| A | US-A-3 474 660 (J.W. DOOLEY)<br>* Zusammenfassung; Spalte 3, Zeilen 10-12; Anspruc 6 * | 1,8,9 | |
| A | FR-A-2 116 513 (LEYBOLD-HERAEUS)<br>* Ansprüche 1,2; Figuren 4,5 * | 1,5 | |
| A | US-A-3 888 110 (A.J. CLARK)<br>* Zusammenfassung; Figuren 1-4 * | 1 | |

| | RECHERCHIERTE SACHGEBIETE (Int. Cl.5) |
|---|---|
| | G 01 N |

Der vorliegende Recherchenbericht wurde für alle Patentansprüche erstellt

| Recherchenort | Abschlußdatum der Recherche | Prüfer |
|---|---|---|
| Den Haag | 24 April 91 | KEMPF G.V. |